# EUROPÄISCHE PATENTSCHRIFT

(11) **EP 1 404 551 B1**
(45) Veröffentlichungstag und Bekanntmachung des Hinweises auf die Patenterteilung: **12.03.2008**
(21) Anmeldenummer: 02745116.0
(22) Anmeldetag: 01.06.2002
(51) Int. Cl.: B60S 1/34

(54) **WISCHERARM UND SCHEIBENWISCHVORRICHTUNG, INSBESONDERE FÜR EIN KRAFTFAHRZEUG UND VERFAHREN ZUR HERSTELLUNG EINES WISCHERARMS**
WIPER ARM AND WINDSHIELD WIPER DEVICE, PARTICULARLY FOR A MOTOR VEHICLE AND METHOD FOR PRODUCING A WIPER ARM
BRAS D'ESSUIE-GLACE ET SYSTEME D'ESSUIE-GLACE, NOTAMMENT POUR AUTOMOBILE ET PROCEDE POUR PRODUIRE UN BRAS D'ESSUIE-GLACE

(30) Priorität: 02.07.2001 DE 10131580
(43) Veröffentlichungstag der Anmeldung: 07.04.2004
(73) Patentinhaber: ROBERT BOSCH GMBH, 70442 Stuttgart (DE)
(72) Erfinder: ZIMMER, Joachim, 77880 Sasbach (DE); RAPP, Harald, 77815 Buehl (DE); PENNE, Frans, B-9300 Aast (BE)
(86) Internationale Anmeldenummer: PCT/DE2002/002019
(87) Internationale Veröffentlichungsnummer: WO 2003/004323

(56) Entgegenhaltungen:
- EP-A- 0 579 550
- EP-A- 1 095 830
- WO-A-01/62560
- DE-A- 4 136 938

## Beschreibung

### Stand der Technik

Die Erfindung betrifft einen Wischerarm sowie ein Verfahren zur Herstellung eines solchen und eine Scheibenwischvorrichtung nach Gattung der unabhängigen Ansprüche.

Es sind schon zahlreiche Wischerarme für Kraftfahrzeuge, beispielsweise aus der EP 1 095 830 bekannt, welche aus einem Gelenkteil und einem Befestigungsteil bestehen, die über einen Bolzen drehbeweglich miteinander verbunden sind. Der maximal mögliche Drehwinkel zwischen den beiden Teilen ist über Rastnocken und Anschlagelemente begrenzt.

Das Gelenkteil ist von länglicher, im Querschnitt im Wesentlichen U-förmiger Gestalt und weist daher eine Basis und zwei etwa orthogonal zu Basis angeordnete Lateralflanken auf. Aus den basisabgewandten Kanten der Lateralflanken sind Laschen herausgestanzt und gebogen, die als Rastnocken zur Drehwinkelbegrenzung dienen.

Weiterhin ist aus derselben Veröffentlichung bekannt, Rastnocken im inneren des U-förmigen Querschnitts als zylindrische Zapfen auszubilden, die durch geeignete Prägung von außen hergestellt werden.

Da die Rastnocken aus der Ebene, die durch die basisabgewandten Kanten der Lateralflanken gebildet wird, herausstehen ergibt sich ein ungünstiger Strömungsverlauf der die Windgeräusche am Fahrzeug, insbesondere bei hohen Geschwindigkeiten, negativ beeinflußt.

Weiterhin ist aus der EP-A-1 095 830 ein Wischerarm mit den Merkmalen des Oberbegriffs des Anspruchs 1 bekannt.

### Vorteile der Erfindung

Der erfindungsgemäße Wischerarm mit den Merkmalen des Hauptanspruchs hat den Vorteil, dass durch die im Seitenprofil verdeckte Anordnung der Rastnocke dieselbe im Seitenprofil nicht sichtbar ist und störende Verwirbelungen im Anströmbereich des Wischerarms vermieden werden. Dadurch werden der Luftwiderstand und die Windgeräusche des Wischerarms reduziert. Ist die Rastnocke darüber hinaus mit einer Lateralflanke des Wischerarms einstückig ausgebildet kann auf zusätzliche Befestigungsmittel verzichtet werden.

Durch die in den Unteransprüche aufgeführten Maßnahmen ergeben sich vorteilhafte Weiterbildungen und Verbesserungen der im Hauptanspruch angegebenen Merkmale.

Besonders vorteilhaft ist es, wenn die Rastnocke im Wesentlichen quaderförmig ist und an einer Außenkante der Lateralflanke scharfkantig ausgeformt ist, so dass die Außenkante ungestört verläuft. Durch die quaderförmige Ausbildung der Rastnocke kann diese über einen breiten Bereich an der Lateralflanke des Wischerarms anliegen, wodurch sich eine hohe Festigkeit der Verbindung ergibt.

Dabei ist besonders vorteilhaft, wenn die im Wesentlichen quaderförmige Rastnocke sich etwa parallel zur Basis des Wischerarms erstreckt und von der basisabgewandten Kante der Lateralflanke beabstandet ist, so daß die Rastnocke im Inneren des U-förmigen Querschnitts angeordnet ist.

Besteht der Wischerarm zumindest aus einem Gelenkteil von im Wesentlichen länglicher Gestalt, welches an einem Ende mit einem Befestigungsteil verbunden ist, das mit einer pendelbar antreibbaren Wischerwelle verbindbar ist so ist dieser aus wenigen Teilen einfach und kostengünstig herzustellen.

Besonders vorteilhaft ist es, wenn das Gelenkteil mit einem Befestigungsteil drehbeweglich verbunden ist und das Gelenkteil ein, mit wenigstens einer Rastnocke zusammenwirkendes Anschlagelement zur Drehwinkelbegrenzung aufweist. Auf diese Weise kann der Drehwinkel zwischen Befestigungsteil und Gelenkteil begrenzt werden ohne dass Konstruktionen notwendig sind, die den Strömungsverlauf im Bereich des Wischerarmes stören.

Ist die Rastnocke darüber hinaus gestaucht, so wird das Material im Bereich der Rastnocke verfestigt, in dem eine hohe Festigkeit erforderlich ist. Durch das stauchen wird die Rastnocke außerdem genau positioniert, wodurch Toleranzen minimiert werden.

Die erfindungsgemäße Scheibenwischvorrichtung mit einem Wischerarm nach einem der Ansprüche 1 bis 6 hat den Vorteil, dass sie durch verdeckte Rastnocken besonders strömungsoptimiert ist und daher auch in Fahrzeugen mit höheren Geschwindigkeiten eingesetzt werden kann.

Das erfindungsgemäße Verfahren mit den Merkmalen des Anspruchs 8 ist besonders vorteilhaft, da nach dem Stanzen der Kontur des Gelenkteils mit Rastnocken aus einem Blech mit folgendem Umbiegen und Stauchen der Rastnocken mit anschließendem scharfkantigen Formen der Kante der Lateralflanke ein einfaches Verfahren zur Verfügung steht, mit dem Wischerarme hergestellt werden können deren Rastnocken verdeckt angeordnet sind.

Besonders vorteilhaft ist dabei, wenn das Gelenkteil drehbeweglich mit dem Befestigungsteil verbunden ist, wobei zumindest eine Grenze des Drehwinkels zwischen Gelenkteil und Befestigungsteil durch die Rastnocken begrenzt wird.

### Zeichnung

Ein Ausführungsbeispiel der Erfindung ist in den Zeichnungen dargestellt und in der nachfolgenden Beschreibung näher erläutert. Es zeigen:
Fig. 1 einen Wischerarm nach dem Stand der Technik in einer perspektivischen Darstellung,
Fig. 2 das Ende eines Gelenkteils nach dem Stand der Technik in einer perspektivischen Darstellung,
Fig. 3 das Ende eines Gelenkteils einer erfindungsgemäßen Wischerarms in einer perspektivischen Darstellung und
Fig. 4 ein erfindungsgemäßes Verfahren in einer schematischen Darstellung.

### Beschreibung des Ausführungsbeispiels

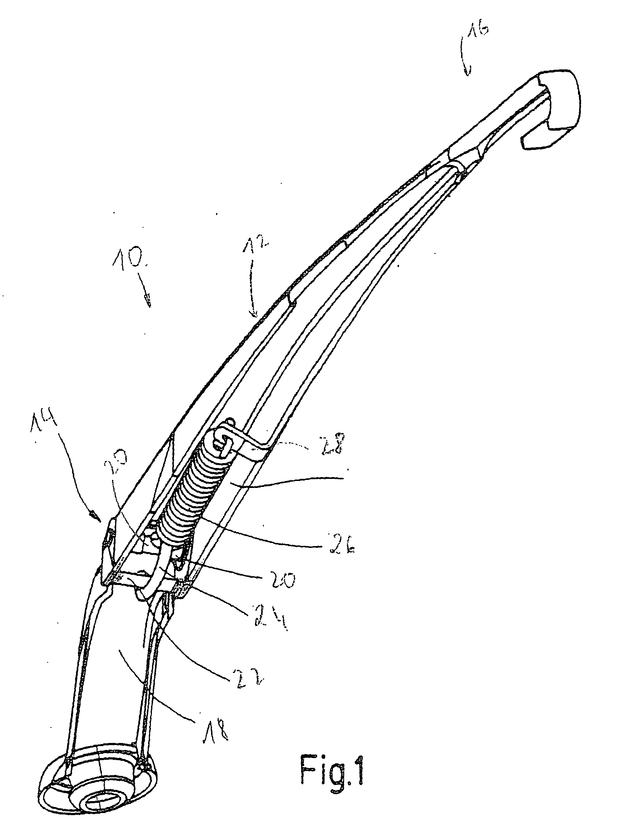

In Fig. 1 ist ein erfindungsgemäßer Wischerarm 10 mit seinen wichtigsten Elementen perspektivisch dargestellt. Dieser besteht im Wesentlichen aus einem Gelenkteil 12 von länglicher Gestalt, welches ein erstes Ende 14 sowie ein zweites Ende 16 aufweist. Das erste Ende 14 ist mit einem Befestigungsteil 18 drehbeweglich durch ein Gelenkmittel 20, beispielsweise einen Bolzen, verbunden. Das zweite Ende 16 ist mit einem nicht dargestellten Wischblatt verbindbar. Das zweite Ende 16 kann auch eine Wischstange tragen an der das Wischblatt befestigt ist. In diesem Falle trägt das Gelenkteil 12 das Wischblatt mittelbar.

Weiterhin weist das Befestigungsteil 18 ein Befestigungsmittel 22 auf an dem über einen C-Bügel 24 ein Zugmittel 26 angelenkt ist, welches mit seinem anderen Ende an einer Lasche 28 am Gelenkteil 12 befestigt ist. Dadurch kann das Gelenkteil um das Gelenkmittel 20 gedreht werden wobei die Kraft die dazu notwendig ist durch die Eigenschaften des Zugmittels 26 bestimmt wird.

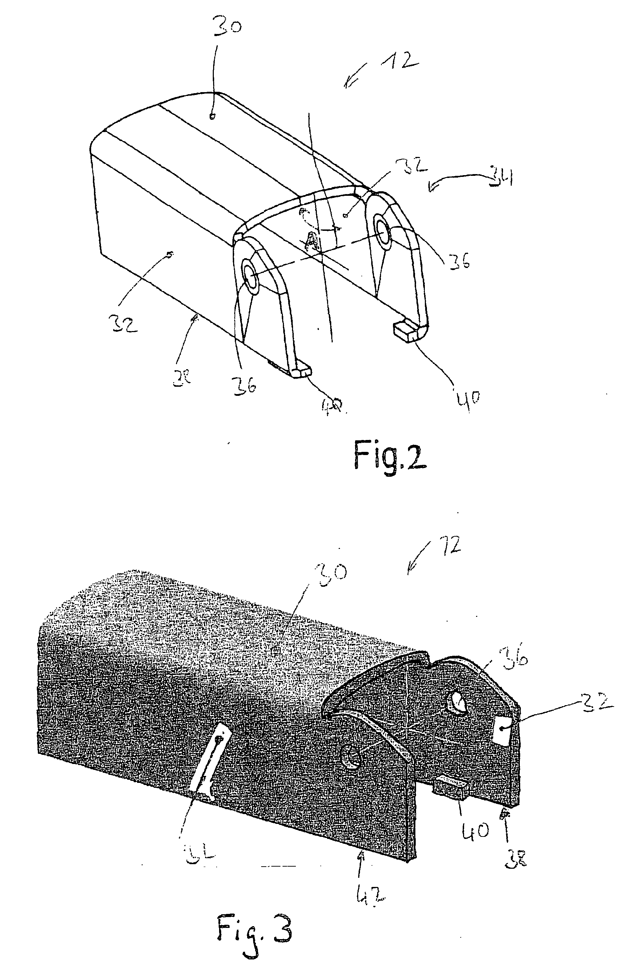

Fig. 2 zeigt das erste Ende 14 eines Gelenkteils 12 nach dem Stand der Technik in perspektivischer Darstellung. Das Gelenkteil 12 ist Im Querschnitt von U-förmiger Gestalt mit einer Basis 30 und zwei Lateralflanken 32. Im Drehbereich 34 ist die Basis 30 ausgespart, wodurch die beiden Lateralflanken 32 aus dem U-förmigen Querschnitt lappenartig herausstehen. Die Lateralflanken 32 weisen eine Bohrung 36 auf, in der nach der Montage der Bolzen 20 sitzt. Die Lateralflanken 32 weisen an ihrer basisabgewandten Kante 38 jeweils eine Rastnocke 40 auf, die über Anschlagelemente, die am Befestigungsteil 18 angeordnet sind, zur Drehwinkelbegrenzung dienen.

Bei der Herstellung eines solchen Wischerarms wird zuerst ein Blech in einer Ebene gestanzt, welches die Basis 30, die Lateralflanken 32 sowie die Rastnocken 40 aufweist. Anschließend wird das Blech über einem Kern gebogen, so dass die beiden Lateralflanken 32 mit der Basis 30 eine Winkel A einschließen, der typischerweise etwa rechtwinklig ist. Die Basis 30 selbst, wird dabei buckelartig gebogen. Anschließend wird der Kern entfernt und die Rastnocken 40 nach innen, also in das innere des U-förmigen Profils hineingebogen.

Fig. 3 zeigt das erste Ende 14 eines Gelenkteils 12 eines erfindungsgemäßen Wischerarms 10 in einer perspektivischen Darstellung. Die beiden Lateralflanken 32 sind durch die bucklige Basis 30 miteinander verbunden. An der basisabgewandten Kante 38 der Lateralflanke 32 ist das quaderförmige Rastelement 40 angeordnet. Natürlich können überall entlang der basisabgewandten Kante 38 der Lateralflanke 32 Rastnocken 40 angeordnet werden. Diese können auch eine andere Form, beispielsweise die eines Halbzylinders besitzen. Die Fläche des Rastelementes 40, die der Basis 30 des Gelenkteils 12 abgewandt ist, befindet sich dabei in einer Ebene mit der basisabgewandten Kante 38 der Lateralflanke 32. Auf diese Weise ist die Rastnocke 40 im Seitenprofil verdeckt.

Die Kante der Lateralflanke 32, die der Basis 30 und der Rastnocke 40 abgewandt ist, hier im folgenden mit Außenkante 42 der Lateralflanke 32 bezeichnet, völlig ungestört.

Die Rastnocke 40 kann selbstverständlich auch etwas zur Basis 30 hin verschoben sein, so daß sich zwischen der Kante 38 und der basisabgewandten Fläche der Rastnocke 40 ein Abstand B ergibt.

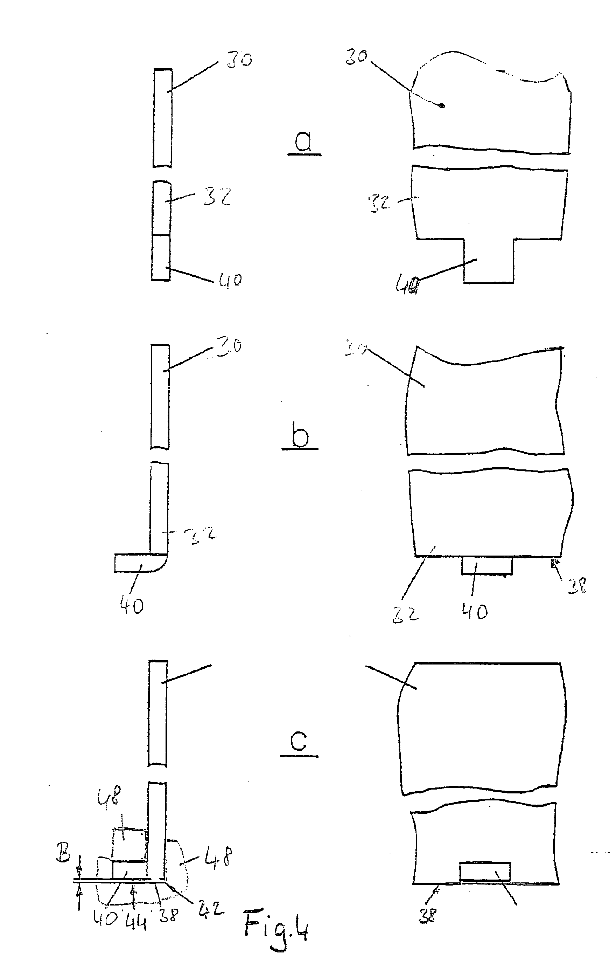

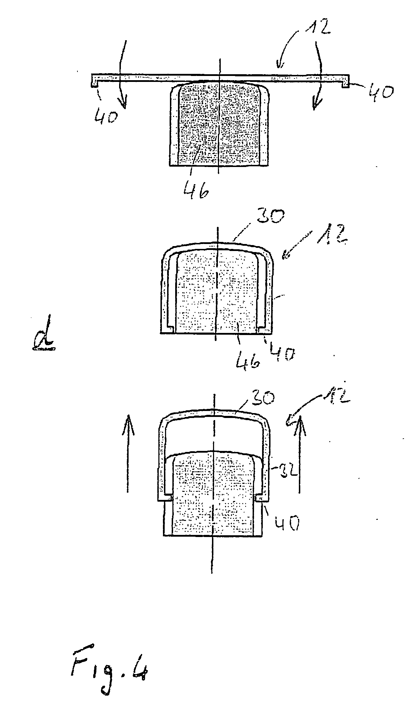

In Fig. 4 sind die wesentlichen Schritte des erfindungsgemäßen Verfahrens dargestellt.

In einem ersten Schritt a wird die Kontur des Gelenkteils 12 mit den Lateralflanken 32 und den Rastnocken 40 aus einem ebenen Stanzblech ausgestanzt.

Anschließend wird in einem zweiten Schritt b, die Rastnocke 40 um etwas 90° aus der Ebene des Stanzblechs herausgebogen. Diese Rastnocke 40 steht dann über die basisabgewandte Kante 38 der Lateralflanke 32 hervor.

Im dritten Schritt c werden die Rastnocken 40 durch einen Stempel 48, der die Form der Rastnocken 40 aufweist, in Richtung des Pfeiles 44 gestaucht. Dadurch wird das Stanzblech im Bereich der Rastnocke 40 verfestigt sowie die Rastnocke über die Kante 38 hinaus verschoben. Durch einen geeigneten Stempel 48 kann dies auch soweit erfolgen, dass die Rastnocke 40 von der Kante 38 um den Abstand B beabstandet ist. In diesem Schritt kann die Rastnocke 40 auch nochmals auf Maß gestanzt oder beschnitten werden.

In einem letzten Schritt d wird das Blech mit den fertigen Rastnocken um einen Werkzeugkern 46 zur U-Form gebogen. Im Bereich der Rastnocken 40 weist der Werkzeugkern 46 entsprechende Aussparungen auf, so dass das U-förmige Gelenkteil nach dem Biegen problemlos vom Werkzeugkern 46 abziehbar ist.

## Patentansprüche

1. Wischerarm (10), insbesondere für eine Scheibenwischvorrichtung eines Kraftfahrzeugs, mit mindestens einem Gelenkteil (12) und/oder einem Befestigungsteil (18) mit einer Basis (30) von der sich mindestens eine, vorzugsweise zwei Lateralflanken (32) in einem Winkel (A), insbesondere etwa lotrecht erstrecken, wobei mindestens eine Lateralflanke (32) mindestens eine, im Seitenprofil verdeckt angeordnete Rastnocke (40) aufweist, die einstückig mit der Lateralflanke (32) ausgebildet ist, **dadurch gekennzeichnet, daß** die Rastnock (40) sich etwa von der basisabgewandten Kante (38) der Lateralflanke (32) aus erstreckt und die insbesondere quaderförmige Rastnocke (40) an einer Außenkante (42) der Lateralflanke (32) scharfkantig ausgeformt und gestaucht ist, so daß die Außenkante (42) ungestört verläuft.

2. Wischerarm (10) nach Anspruch 1, **dadurch gekennzeichnet, daß** die insbesondere quaderförmige Rastnocke (40) sich im wesentlichen parallel zur Basis () und/oder senkrecht zur Lateralflanke (32) erstreckt und von der basisabgewandten Kante (38) der Lateralflanke (32) beabstandet ist.

3. Wischerarm (10) nach einem der vorhergehenden Ansprüche, **dadurch gekennzeichnet, daß** das Gelenkteil (12) von im wesentlichen länglicher Gestalt ist, zwei Enden (14, 16) aufweist und am ersten Ende (14) mit einem Befestigungsteil (18) verbunden ist, welches mit einer pendelbar antreibbaren Wischerwelle verbindbar ist und an seinem zweiten Ende (16) mit einem Wischblatt, zumindest mittelbar verbindbar ist.

4. Wischerarm (10) nach einem der vorhergehenden Ansprüche, **dadurch gekennzeichnet, daß** das Gelenkteil (12) mit einem Befestigungsteil (18) drehbeweglich verbunden ist welches mindestens ein, mit wenigstens einer Rastnocke (40) zusammenwirkendes Anschlagelement zur Drehwinkelbegrenzung aufweist.

5. Scheibenwischvorrichtung, **dadurch gekennzeichnet, daß** ein Wischerarm (10) nach einem der Ansprüche 1 bis 4 vorgesehen ist.

6. Verfahren zur Herstellung eines Wischerarms, insbesondere eines Wischerarms (10) nach einem der Ansprüche 1 bis 6, mit einem Gelenkteil (12) und/oder einem Befestigungsteil (18), welches zumindest eine Basis (30) umfaßt, von der sich mindestens eine, vorzugsweise zwei Lateralflanken (32) in einem, insbesondere rechten Winkel (A) erstrecken, wobei mindestens eine Lateralflanke (32) mindestens eine Rastnocke (40) aufweist die sich von der basisabgewandten Kante (38) der Lateralflanke (32) aus erstreckt, mit mindestens folgenden Schritten:
- Stanzen der Kontur eines Gelenkteils (32) mit Rastnocken (40) aus einem Blech,
- Umbiegen der Rastnocken (40) um etwa 90° aus der Blechebene,
- Stauchen der Rastnocken (40),
- scharfkantiges Formen der Kante (42) und
- Umbiegen der Lateralflanke (32) um den Winkel (A), so daß ein im Querschnitt etwa U-förmiges Profil entsteht.

7. Verfahren nach Anspruch 6, **dadurch gekennzeichnet, daß** das Gelenkteil (12) drehbeweglich mit einem Befestigungsteil (18) verbunden ist wobei zumindest eine Grenze des Drehwinkels zwischen Gelenkteil (12) und Befestigungsteil (18) durch die Rastnocken (40) begrenzt wird.

## Claims

1. Wiper arm (10), in particular for a windscreen wiper device of a motor vehicle, with at least one articulated part (12) and/or one fastening part (18) with a base (30) from which at least one, preferably two lateral flanks (32) extend at an angle (A), in particular approximately perpendicularly, at least one lateral flank (32) having at least one latching cam (40) which is arranged concealed in the side profile and is formed integrally with the lateral flank (32), **characterized in that** the latching cam (40) extends approximately from that edge (38) of the lateral flank (32) which faces away from the base, and the in particular cuboidal latching cam (40) on an outer edge (42) of the lateral flank (32) is formed with a sharp edge and is compressed such that the outer edge (42) has an undisturbed profile.

2. Wiper arm (10) according to Claim 1, **characterized in that** the in particular cuboidal latching cam (40) extends essentially parallel to the base (30) and/or perpendicularly with respect to the lateral flank (32) and is spaced apart from that edge (38) of the lateral flank (32) which faces away from the base.

3. Wiper arm (10) according to one of the preceding claims, **characterized in that** the articulated part (12) is of essentially elongate design, has two ends (14, 16) and is connected at the first end (14) to a fastening part (18), which can be connected to a wiper shaft which can be driven in a pendulum-type manner, and can be connected at its second end (16), at least indirectly, to a wiper blade.

4. Wiper arm (10) according to one of the preceding claims, **characterized in that** the articulated part (12) is connected rotatably to a fastening part (18) which has at least one stop element, which interacts with at least one latching cam (40), for limiting the angle of rotation.

5. Windscreen wiper device, **characterized in that** a wiper arm (10) according to one of Claims 1 to 4 is provided.

6. Method for producing a wiper arm, in particular a wiper arm (10) according to one of Claims 1 to 6, with an articulated part (12) and/or with a fastening part (18) which comprises at least one base (30) from which at least one, preferably two lateral flanks (32) extend at, in particular, a right angle (A), at least one lateral flank (32) having at least one latching cam (40) which extends from that edge (38) of the lateral flank (32) which faces away from the base, with at least the following steps:
- punching the contour of an articulated part (32) with latching cams (40) out of a metal sheet,
- bending over the latching cams (40) through approximately 90° out of the plane of the metal sheet,
- compressing the latching cams (40),
- forming the edge (42) with a sharp edge and
- bending over the lateral flank (32) by the angle (A), thus producing a profile which is approximately U-shaped in cross section.

7. Method according to Claim 6, **characterized in that** the articulated part (12) is connected rotatably to a fastening part (18), with at least one limit of the angle of rotation between articulated part (12) and fastening part (18) being limited by the latching cams (40).

## Revendications

1. Bras d'essuie-glace (10), notamment pour une installation d'essuie-glace de véhicule automobile comportant au moins une pièce d'articulation (12) et/ou une pièce de fixation (18) ayant une base (30) d'où sont issus au moins un et de préférence deux flancs latéraux (32) suivant un angle (A), notamment perpendiculairement, et au moins un flanc latéral (32) comporte au moins un bossage d'arrêt (40) situé caché dans le profil latéral, ce bossage d'arrêt étant réalisé en une seule pièce avec le flanc latéral (32),
**caractérisé en ce que**
le bossage d'arrêt (40) s'étend sensiblement à partir de l'arête (38) du flanc latéral (32) à l'opposé de la base et le bossage d'arrêt (40), notamment parallélépipédique, a une forme tassée, avec une arête vive sur l'arête extérieure (42) du flanc latéral (32) pour que l'arête extérieure (42) ne soit pas interrompue.

2. Bras d'essuie-glace (10) selon la revendication 1,
**caractérisé en ce que**
le bossage d'arrêt (40), notamment parallélépipédique, s'étend pratiquement parallèlement à la base (30) et/ou perpendiculairement au flanc latéral (32) et s'écarte de l'arête (38) du flans latéral (32) à l'opposé de la base.

3. Bras d'essuie-glace (10) selon l'une des revendications précédentes,
**caractérisé en ce que**
la pièce d'articulation (12) a une forme pratiquement allongée, avec deux extrémités (14, 16), la première extrémité (14) étant fixée à une pièce de fixation (18) reliée à un arbre d'essuie-glace entraîné suivant un mouvement pendulaire et sa seconde extrémité (16) est reliée au moins indirectement à un balai d'essuie-glace.

4. Bras d'essuie-glace (10) selon l'une des revendications précédentes,
**caractérisé en ce que**
la pièce d'articulation (12) est reliée de manière mobile en rotation à une pièce de fixation (18) ayant au moins un élément de butée coopérant avec le bossage d'arrêt (40) pour limiter l'angle de rotation.

5. Installation d'essuie-glace
**caractérisée en ce qu'**
elle comporte un bras d'essuie-glace (10) selon l'une des revendications 1 à4.

6. Procédé de fabrication d'un bras d'essuie-glace, notamment d'un bras d'essuie-glace (10) selon l'une des revendications 1 à 6, comportant une pièce d'articulation (12) et/ou une pièce de fixation (18) avec au moins une base (30) d'où sont issus au moins un et de préférence deux flancs latéraux (32) s'étendant notamment suivant un angle droit (A), et au moins un flanc latéral (32) comporte au moins un bossage d'arrêt (40) qui s'étend à partir de l'arête (38) du flanc latéral (32) à l'opposé de la base, procédé comprenant les étapes suivantes :
- estampage dans une tôle du contour d'une pièce d'articulation (32) avec des bossages d'arrêt (40),
- pliage des bossages d'arrêt (40) d'environ 90° hors du plan de la tôle,
- compression des cames d'enclipsage (40),
- mise en forme d'arêtes vives des arêtes (42) et
- pliage des flancs latéraux (32) d'un angle (A) pour obtenir un profil à section sensiblement en forme de U.

7. Procédé selon la revendication 6,
**caractérisé en ce que**
la pièce d'articulation (12) est reliée de manière mobile en rotation à une pièce de fixation (18) et au moins une limite de l'angle de rotation entre la pièce d'articulation (12) et la pièce de fixation (18) est constituée par les bossages d'arrêt (40).
